# EUROPEAN PATENT SPECIFICATION

(11) **EP 4 579 915 B1**
(45) Date of publication and mention of the grant of the patent: **07.10.2026**
(21) Application number: 24767475.7
(22) Date of filing: 15.02.2024
(51) Int. Cl.: H01M 50/342, H01M 50/367, H01M 50/30, H01M 50/383, H01M 50/204, H01M 50/358

(54) **BATTERY MODULE HAVING VENTING HOLE TO BE OPEN BY SEPARATION OF FIRE-RESISTANT COATING LAYER**
BATTERIEMODUL MIT EINER FEUERBESTÄNDIGEN, IN EIN OFFENES ENTLÜFTUNGSLOCH DELAMINIERTEN BESCHICHTUNG
MODULE DE BATTERIE AYANT UNE COUCHE DE REVÊTEMENT IGNIFUGE DÉLAMINÉE POUR OUVRIR UN TROU D'AÉRATION

(30) Priority: 09.03.2023 KR 20230030912
(43) Date of publication of application: 02.07.2025
(73) Proprietor: LG Energy Solution, Ltd., Seoul 07335 (KR)
(72) Inventor: YUN, Hyun-Seop, Daejeon 34122 (KR); LEE, Jung-Hoon, Daejeon 34122 (KR); JANG, Sung-Hwan, Daejeon 34122 (KR)
(74) Representative: Plasseraud IP
(86) International application number: PCT/KR2024/095203
(87) International publication number: WO 2024/186189

(56) References cited:
- EP-A1- 3 937 300
- EP-A1- 4 601 099
- WO-A1-2022/220605
- CN-U- 209 401 710
- CN-U- 218 535 893
- KR-A- 20200 071 545
- KR-A- 20220 169 831
- KR-A- 20230 024 836
- US-A1- 2019 157 636

## Description

### TECHNICAL FIELD

The present disclosure relates to a battery module, and more specifically, it relates to a battery module in which a fire-resistant coating layer applied to a mesh plate at the top of a module is partially detached so that a venting hole is opened.

The present application claims priority to Korean Patent Application No. 10-2023-0030912 filed on March 09, 2023 in the Republic of Korea.

### BACKGROUND ART

CN20940 171 OU discloses a battery module comprising a plurality of battery cells in a module case, wherein the case comprises at least a venting hole and a cover member to cover the venting hole.

Semi-permanent batteries, which convert electrical energy into chemical energy and can be repeatedly charged and discharged, are called secondary batteries distinguished from primary batteries that cannot be reused after use.

Secondary batteries include lithium secondary batteries, nickel-cadmium (Ni-Cd) batteries, lead-acid batteries, nickel-metal hydrogen (Ni-MH) batteries, zinc-air batteries, and alkaline manganese batteries. Among these, lead-acid batteries and lithium secondary batteries are the most widely commercialized secondary batteries.

In particular, lithium secondary batteries have advantages such as high energy storage density, lightweight and miniaturized structures, excellent safety, a low discharge rate, and a long lifespan, so they are widely used as electric vehicle batteries nowadays. For reference, lithium secondary batteries are generally classified into cylindrical, prismatic, and pouch types depending on their manufacturing types, and their uses range from electric vehicle batteries to ESS batteries and other electrical devices.

Currently, the operating voltage of one lithium secondary battery cell is approximately 2.5V to 4.5V. Therefore, in order to apply secondary batteries to an energy source for electric vehicles, a plurality of lithium-ion battery cells are connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than an appropriate temperature, and failure of heat control to an appropriate temperature is likely to lead to unexpected ignition or explosion. **In** addition, since the battery module has a structure in which the secondary batteries are intensively stored inside a module housing, if any one secondary battery becomes a trigger cell due to heat propagation, heat and flame may quickly transfer to surrounding secondary batteries, so that the secondary batteries are more likely to ignite in succession.

**In** particular, since a large number of battery modules must be accommodated in a limited space for high integration, there is not enough empty space inside the battery module. For example, a battery pack including one or more battery modules may have a narrow space between a module case and a pack case.

Therefore, it is necessary to prevent the discharged venting gas from entering other modules even in such a narrow space while quickly discharging the venting gas, thereby delaying or suppressing TP (Thermal Propagation).

### DISCLOSURE

### Technical Problem

The present disclosure has been designed to solve the problems of the related art, and therefore the present disclosure is directed to providing a battery module with an improved structure capable of relieving the internal pressure by discharging venting gas generated inside the battery module and preventing the inflow of flame emitted from other adjacent battery modules.

The technical problems that the present disclosure seeks to solve are not limited to the above-mentioned problems, and other problems not mentioned above will be clearly understood by those skilled in the art from the description of the invention described below.

### Technical Solution

The invention is defined by the appended independent claim 1. Additional embodiments are defined in the dependent claims.

According to one aspect of the present disclosure, there is provided a battery module that includes: a cell assembly including a plurality of battery cells stacked on each other; a module case configured to store the cell assembly in an inner space and having a venting hole formed thereon; and a cover member disposed on the outer surface of the module case so as to cover the venting hole and including a fire-resistant coating layer coated with a fire-resistant coating material that is detached by pressure of venting gas when the venting gas is generated inside the module case.

The venting hole may be formed on the upper side of the module case.

The cover member may further include a basal layer coupled to the upper surface of the module case so as to face the same and having the fire-resistant coating layer bonded thereto.

The fire-resistant coating layer may be provided over the entire area of the basal layer, and may be bonded to some or all sections of the basal layer in the thickness direction thereof.

The basal layer may include: at least one mesh plate having a plurality of mesh members and holes; and a support frame disposed at an edge of the mesh plate so as to support the mesh plate.

The fire-resistant coating layer may be configured by bonding the fire-resistant coating material to the mesh members to block the holes.

The fire-resistant coating layer may include one or more inorganic materials selected from ceramic, silicon, silica aerogel, and silica-based inorganic fiber.

The particle size of the inorganic material is smaller than the holes.

The basal layer may include a recessed guide portion provided to face the venting hole and guide the introduction of the venting gas.

The recessed guide portion may have an axial inclined surface formed to gradually become narrower in the thickness direction of the basal layer when viewed upward from the venting hole.

The fire-resistant coating layer may be partially formed on the surface of the basal layer, which faces the venting hole.

According to another aspect of the present disclosure, there may be provided a battery pack including one or more battery modules described above.

### Advantageous Effects

According to one aspect of the present disclosure, it is possible to a battery module with an improved structure capable of relieving, when venting gas is generated in the inner space of the battery module, the internal pressure by discharging the venting gas to the outside and preventing the flame emitted from other adjacent battery modules from entering the battery module.

In particular, even if the space between the battery module and the pack case is narrow in the case where the battery module is stored inside the pack case, the fire-resistant coating layer may be detached due to gas pressure such that the venting hole is opened, thereby securing a sufficient discharge path for the venting gas. Therefore, since the venting gas is able to be quickly discharged to the outside, heat accumulation and thermal explosion of the battery module may be effectively prevented.

In addition, since a separate gap or space for opening the venting hole is not required, the energy density of the battery pack may be prevented from decreasing.

In addition, according to one aspect of the present disclosure, since the venting holes of modules adj acent thereto remain closed due to the fire-resistant coating layer, it is possible to prevent external foreign substances, venting gas discharged outside the battery module or flame or sparks contained in such venting gas from flowing into other venting holes. Therefore, chain ignition or thermal runaway in a normal battery cell or battery module due to venting gas or flame may be maximally delayed.

### DESCRIPTION OF DRAWINGS

FIG. 1 is a perspective view schematically illustrating a battery module according to an embodiment of the present disclosure.
FIG. 2 is an exploded perspective view of primary elements of the battery module in FIG. 1.
FIGS. 3 and 4 are cross-sectional views of a cover member according to an embodiment of the present disclosure.
FIG. 5 is a diagram of a modified example of a cover member of a battery module according to an embodiment of the present disclosure, which schematically illustrates a state in which a fire-resistant coating layer is bonded to another portion of a basal layer in the thickness direction.
FIG. 6 is a cross-sectional view illustrating the structural of a battery pack including a battery module according to an embodiment of the present disclosure.
FIG. 7 is a partially enlarged view of FIG. 6.
FIG. 8 is a cross-sectional view of a cover member in a battery module according to another embodiment of the present disclosure.
FIG. 9 is a diagram schematically illustrating a path through which venting gas is discharged through a cover member in a battery module according to another embodiment of the present disclosure.
FIG. 10 is a perspective view of a cover member in a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

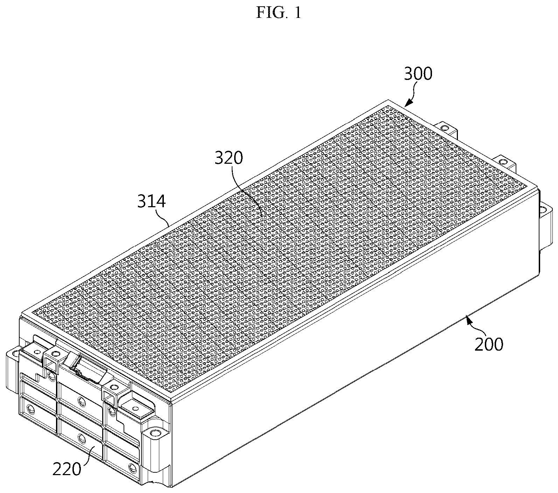

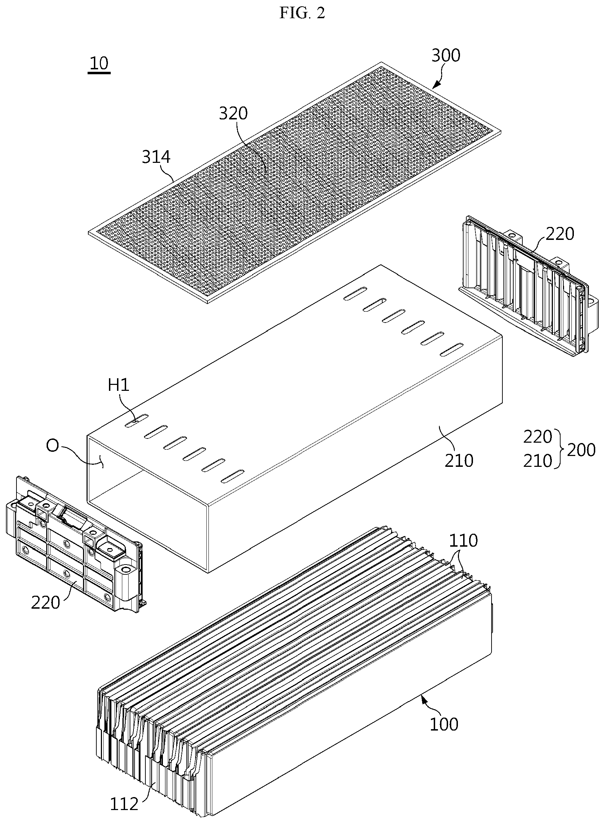

FIG. 1 is a perspective view schematically illustrating a battery module according to an embodiment of the present disclosure, and FIG. 2 is an exploded perspective view of primary elements of the battery module in FIG. 1.

Referring to FIGS. 1 and 2, a battery module 10 according to the present disclosure includes a cell assembly 100, a module case 200, and a cover member 300.

The cell assembly 100 may include one or more battery cells 110. Here, each battery cell 110 may indicate a secondary battery. Referring to FIG. 2, the battery cell 110 includes an electrode assembly, a case for accommodating the electrode assembly, and a pair of electrode leads 112 connected to the electrode assembly and extending to the outside of the case, serving as electrode terminals. The pair of electrode leads 112 extends from both ends of the battery cell 110, that is, in the longitudinal direction.

If necessary, the battery cell 110 may have the electrode leads 112 located only at one end of the battery cell 110. Meanwhile, the present disclosure is not limited to a specific type or form of battery cell 110, and various battery cells 110 known at the time of filing the present disclosure may be used to constitute the cell assembly 100 of the present disclosure. Although the present disclosure will be described based on a pouch-type secondary battery that has high energy density and is easy to stack, a cylindrical or prismatic secondary battery may also be applied to the battery cell 110.

These battery cells 110 may be arranged to be stacked in at least one direction. In the present embodiment, referring to FIG. 2, the battery cells 110 may be arranged to be stacked in the horizontal direction (width direction of the battery module 10) while standing upright.

The cell assembly 100 is a collection of battery cells 110 obtained by stacking a plurality of battery cells 110. That is, the cell assembly 100 may be a group of a plurality of pouch-type battery cells 110 stacked in one direction such that their wide sides stand, as shown in FIG. 2.

The module case 200 may be configured to have an inner space that accommodates the battery cells 110. The module case 200 of the present embodiment may include a case body 210 and end plates 220 disposed on the front and rear sides of the case body 210.

The case body 210 may be configured in the shape of a square tube in a hollow structure having open ends O at both ends in the longitudinal direction and having an empty space therein. For example, the case body 210 may be configured in the form of a tube that has an upper face, a lower face, a left face, and a right face, and has openings formed at the front and rear ends, respectively.

In addition, the case body 210 may be configured such that the battery cells 110 are able to be inserted thereinto in the longitudinal direction. That is, the case body 210 may be configured to insert the battery cells 110 therein using a sliding or press-fitting manner. For press-fitting, there may be almost no gap between the upper and lower faces of the case body 210 and the upper and lower ends of the battery cells 110, and there may also be almost no gap between both side faces of the case body 210 and both side portions of the battery cells 110. This case body 210 may be made of a metal material with rigidity and heat resistance in order to physically or chemically protect the accommodated battery cells 110.

The end plate 220 may be coupled to the open end O of the case body 210 to face one side of the cell assembly 100 where the electrode leads 112 of the battery cells 110 are located such that a portion where the electrode leads 112 are fixedly connected to the bus-bars on the bus-bar frame is not exposed to the outside. For example, the end plate 220 may be made of an insulating material on the inner side and a metal material on the outer side, and may be coupled to the case body 210 by welding. Meanwhile, although not shown in the drawings for convenience, the end plate 220 may be partially provided with holes or slits to expose components that need to be exposed to the outside, such as positive and negative electrode terminals or connectors of the battery module 10.

The module case 200 in this configuration may have venting holes H1 formed on at least one side thereof. As indicated by H1 in FIG. 2, a plurality of venting holes H1 may be formed close to the left and right edges on the upper surface of the module case 200. This venting holes H1 may be configured to discharge venting gas, generated and ejected from the cell assembly 100 stored in the inner space, to the external space of the module case 200. For example, the module case 200 may be configured to be sealed, excluding the venting holes H1. In addition, the venting hole H1 may be formed to be completely open to penetrate the module case 200 in the inner and outer directions.

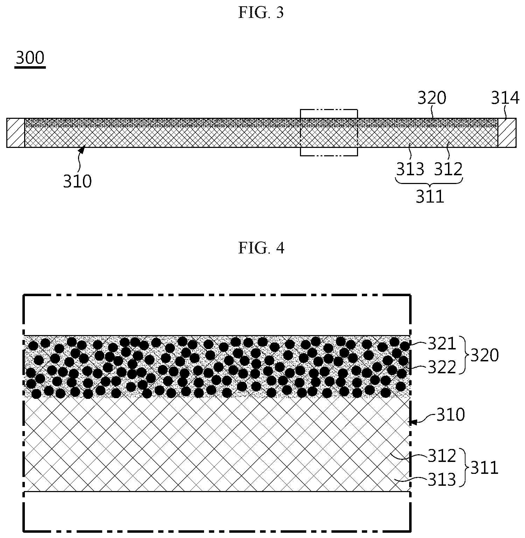

The cover member 300 may be disposed on the outer side of the module case 200 and configured to close the venting holes H1 formed on the module case 200 in a normal state. In the present embodiment, it may be provided on the upper surface of the module case 200 as shown in FIGS. 2 and 3. Accordingly, it may be configured to cover the venting holes H1 formed on the upper surface of the module case 200.

The cover member 300 may be configured to selectively open the venting holes H1 when venting gas is generated from at least one battery cell 110 in the cell assembly 100 stored inside the module case 200.

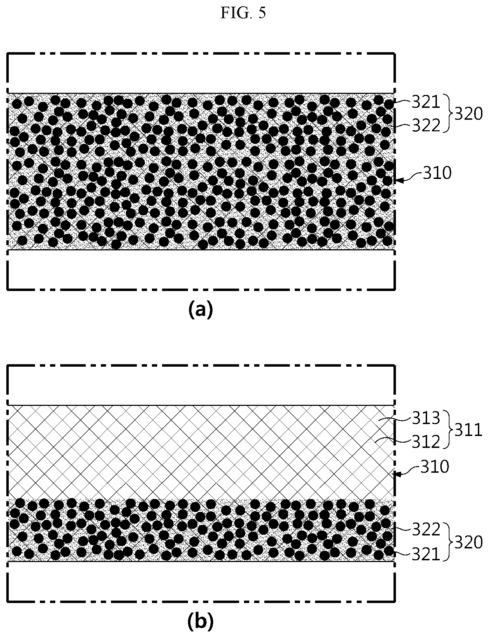

FIGS. 3 and 4 are cross-sectional views of a cover member according to an embodiment of the present disclosure, and FIG. 5 is a diagram of a modified example of a cover member of a battery module 10 according to an embodiment of the present disclosure, which schematically illustrates a state in which a fire-resistant coating layer is bonded to another portion of a basal layer in the thickness direction.

Referring to FIGS. 3 and 4, the cover member 300 includes a basal layer 310 coupled to the upper surface of the module case 200 so as to face the same, and a fire-resistant coating layer 320 coated with a fire-resistant coating material 321 that is detached by the pressure of venting gas when the venting gas is generated inside the module case 200.

The basal layer 310 may be coupled to the upper surface of the module case 200 so as to face the same, and may have substantially the same size as the upper surface of the module case 200.

The basal layer 310 may be at least one mesh plate 311 having a plurality of mesh members 312 and holes 313. This basal layer 310 may be configured to block high-temperature flames and sparks that may travel with venting gas. The basal layer 310 may be disposed to completely cover the venting holes H1, thereby blocking generated flame or sparks from entering and exiting the venting holes H1. As a result, it is possible to sufficiently filter and block flames or sparks accompanying the venting gas and prevent discharge thereof to the outside of the battery pack, thereby minimizing the risk of ignition of structures around the battery pack or other battery packs.

In addition, the basal layer 310 may include a support frame 314 disposed at an edge of the mesh plate 311 to support the mesh plate 311. Even if the mesh plate 311 is exposed to high temperatures, the support frame 314 may firmly hold the mesh plate, thereby preventing distortion, deformation, or damage to the plate.

Meanwhile, a venting structure is required to quickly and effectively discharge the venting gas generated inside the battery module 10. In particular, a selective opening/closing structure is required to maintain the closed state of the venting holes H1 in a normal state but open the venting holes H1 when venting gas is generated due to a thermal event occurring.

Accordingly, the present embodiment may provide a fire-resistant coating layer 320 coated with a fire-resistant coating material 321 that is detached by the pressure of venting gas when the venting gas is generated inside the module case 200.

Referring to FIGS. 2 and 3, the fire-resistant coating layer 320 may be provided over the entire surface of the basal layer 310.

Referring to FIG. 4, the fire-resistant coating layer 320 may be configured such that the fire-resistant coating material 321 is bonded to the mesh members 312 to block the holes 313. Here, the fire-resistant coating layer 320 may include one or more inorganic materials selected from ceramic, silicon, silica aerogel, and silica-based inorganic fiber. In addition, the particle size of the inorganic material may be smaller than the hole 313.

In addition, the fire-resistant coating layer 320 may further include a binder 322 that binds the fire-resistant coating material 321 to the mesh members 312 and various additives. The binder 322 may be a metal-friendly resin, for example, polyvinyl acetal resin, acrylic resin, polyvinyl chloride resin, polyolefin resin, epoxy resin, and the like. The binder 322 includes the fire-resistant coating material 321 and facilitates attachment to the mesh member 312. In addition, the additives may include adhesion enhancers, dispersants, mold release agents, heat stabilizers, antioxidants, or the like

The fire-resistant coating layer 320 may be bonded to some sections of the basal layer 310 in the thickness direction thereof. For example, as shown in FIGS. 2 to 4, the fire-resistant coating layer 320 may be provided in the upper section (with a predetermined thickness) of the basal layer 310 in the thickness direction of the basal layer 310.

Alternatively, as another modified example, as shown in (a) of FIG. 5, the fire-resistant coating layer 320 may be provided over the entire section of the basal layer 310 in the thickness direction. In this case, compared to FIG. 4 or (b) of FIG. 5, the fire-resistant coating layer 320 is provided equal to the thickness of the basal layer 310, so the fire-resistant coating layer 320 may be detached if the venting gas ejected at a higher pressure from the venting hole H1. That is, the pressure range of venting gas at which the venting holes H1 are completely opened may be increased.

In addition, as shown in (b) of FIG. 5, the fire-resistant coating layer 320 may be provided in the lower portion of the basal layer 310. In this case, the fire-resistant coating layer 320 may directly cover the venting holes H1 of the module case 200 without any gaps therebetween, so the degree of sealing of the venting hole H1 may be improved compared to FIG. 4, thereby blocking the inflow of foreign substances, flames, and sparks to a higher level. As described above, the placement position of the fire-resistant coating layer 320 may vary on the basal layer 310 depending on the pressure of the venting gas, the degree of sealing, or other design factors.

Various methods may be considered to apply the fire-resistant coating layer 320 to the basal layer 310. For example, a coating solution may be prepared by dissolving the fire-resistant coating material 321 in an adhesive solvent, and then sprayed in the coating process. The number of sprays may vary depending on the viscosity of the coating solution, and the time and temperature in post-processes such as drying may also be controlled in various ways. The above-described spraying process to form the fire-resistant coating layer 320 may be advantageous in the process of applying the fire-resistant coating layer 320 as shown in FIG. 4 and (b) of FIG. 5.

Alternatively, the coating process may be performed by submerging the basal layer 310 in a tank of coating solution. This may be efficient to form the fire-resistant coating layer 320 over the entire section of the basal layer 310 in the thickness direction, as shown in (a) of FIG. 5.

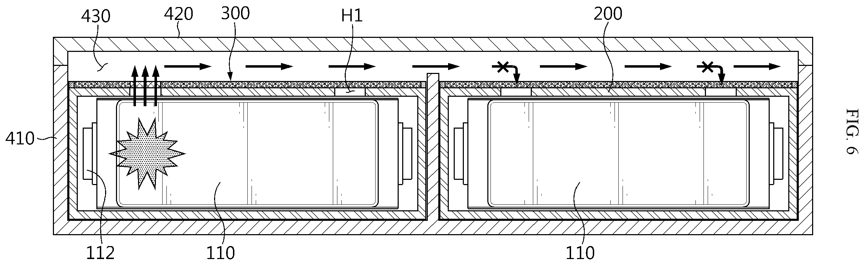

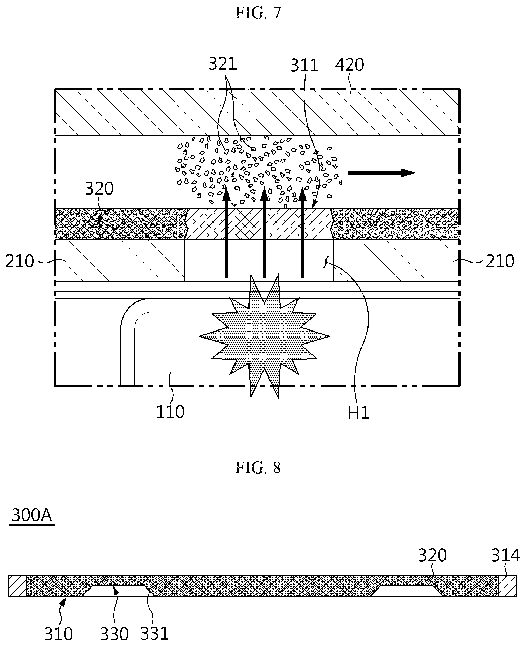

FIG. 6 is a cross-sectional view illustrating the structural of a battery pack including a battery module according to an embodiment of the present disclosure, and FIG. 7 is a partially enlarged view of FIG. 6.

Hereinafter, a venting operation will be described based on configuration in which the fire-resistant coating layer 320 is provided over the entire section of the basal layer 310 in the thickness direction, as shown in (a) of FIG. 5.

The venting hole H1 is covered with the fire-resistant coating layer 320 and remains closed in a normal state.

If a specific event cell ignites and a large amount of venting gas is generated, the gas is ejected toward the venting holes H1 formed at the top.

At this time, as shown in FIGS. 6 and 7, the fire-resistant coating layer 320 is separated from the mesh members 312 and detached upward due to the pressure (high pressure) of the venting gas. At the same time, the mesh plate 311 having holes 313 formed therein is exposed. The venting gas is discharged to the outside of the case body through the holes 313 of the mesh plate 311. Meanwhile, flames or sparks are blocked from escaping outside the case body by the mesh members 312 of the mesh plate 311.

The venting gas discharged from the battery module where the event occurred may move in the inner space 430 of the pack case and pass over the top of another adj acent battery module 10, as shown in FIG. 6. Since the fire-resistant coating layer 320 of the cover member 300 in the adjacent battery module 10 remains closed, instead of being detached from the basal layer 310, the adjacent battery module 10 may not receive thermal damage by the venting gas. In addition, since the venting gas moving in the inner space 430 passes over the top of another battery module at a lower pressure compared to when it is discharged from the event battery module, the fire-resistant coating layer in another battery module 320 is not detached from the basal layer 310 by the venting gas. Accordingly, the venting gas may be blocked from entering the battery module 10.

According to this implemented configuration, when an event occurs, the fire-resistant coating layer 320 blocking the venting holes H1 may be detached by the pressure of venting gas so that the venting holes H1 are opened, thereby securing a sufficient path of discharging the venting gas from the inside of the battery module to the outside. Accordingly, the venting gas may be quickly discharged to the outside, thereby effectively preventing heat accumulation and thermal explosion of the battery module 10.

In addition, according to this implemented configuration, the venting holes H1 in the battery module adjacent thereto may remain closed due to the fire-resistant coating layer 320, thereby preventing external foreign substances, venting gas discharged outside the battery module 10 where the event occurred or flame or sparks contained in the venting gas from flowing into other venting holes H1. Therefore, chain ignition or thermal runaway in a normal battery cell 110 or battery module 10 due to venting gas or flame may be maximally delayed.

In addition, it is possible to prevent the energy density of the battery module 10 or battery pack from decreasing in order to secure a wide inner space 430 for discharging venting gas or flame.

Next, other embodiments of a battery module in the present disclosure will be briefly described with reference to FIGS. 7 to 9.

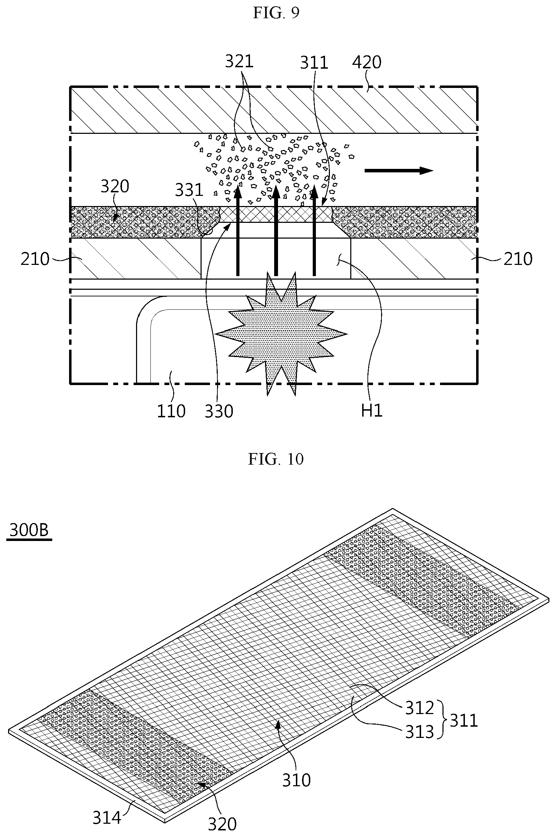

FIG. 8 is a cross-sectional view of a cover member in a battery module according to another embodiment of the present disclosure, and FIG. 9 is a diagram schematically illustrating a path through which venting gas is discharged through a cover member in a battery module according to another embodiment of the present disclosure.

The same reference numbers as in the previous drawings indicate the same members, and redundant descriptions of the same members will be omitted and the description will focus on the differences from the above-described embodiment.

Compared to the above-described embodiment, the battery module according to another embodiment of the present disclosure is provided with an additional configuration to the basal layer 310 of the cover member 300A. That is, the basal layer 310 may include a recessed guide portion 330 that is provided to face the venting holes H1 and guides the inflow of venting gas.

The recessed guide portion 330 may be provided on the lower surface of the basal layer 310, as shown in FIGS. 8 and 9. The recessed guide portion 330 may be disposed to directly face the venting hole H1. The recessed guide portion 330 may be provided by partially pressing or partially cutting the lower surface of the basal layer 310.

The recessed guide portion 330 may have an axial inclined surface 331 formed to gradually become narrower in the thickness direction of the basal layer 310 when viewed upward from the venting hole H1.

This axial inclined surface 331 may be formed to lead to the venting hole H1 such that the inner diameter thereof is reduced. Through this, venting gas may be easily guided to enter the cover member 300. In particular, the venting gas entering the venting hole H1 may easily move upward in the thickness direction of the basal layer 310 along the axial inclined surface 331.

In addition, as the inner diameter is reduced due to the axial inclined surface 331, the flow rate of the venting gas may be increased, thereby locally increasing the pressure of the venting gas and facilitating the detachment of the fire-resistant coating layer 320.

In addition, the recessed guide portion 330 may cause the reduction in the thickness of the fire-resistant coating layer 320, compared to the first embodiment, so the ratio of the fire-resistant coating layer 320 to the basal layer 310 may be adjusted by adjusting the depression depth of the recessed guide portion 330. In addition, the fire-resistant coating layer 320 may be more easily detached due to the pressure of the venting gas.

According to this implemented configuration, even if the space between the battery module and the module case 200 is narrow, the fire-resistant coating layer 320 may be detached due to gas pressure so that the venting holes H1 are opened, thereby securing a sufficient discharge path of the venting gas. Therefore, the venting gas may be quickly discharged to the outside, heat accumulation and thermal explosion of the battery module may be effectively prevented.

In addition, according to this implemented configuration, since the venting holes H1 of modules adjacent thereto remain closed due to the fire-resistant coating layer 320, it is possible to prevent external foreign substances, venting gas discharged outside the battery module or flame or sparks contained in such venting gas from flowing into other venting holes H1. Therefore, chain ignition or thermal runaway in a normal battery cell 110 or battery module due to venting gas or flame may be maximally delayed.

FIG. 10 is a perspective view of a cover member in a battery module according to another embodiment of the present disclosure.

Referring to FIG. 10, the fire-resistant coating layer 320 of a battery module according to another embodiment of the present disclosure may be partially provided on the surface of the basal layer 310, which faces the venting holes H1.

**In** this case, the cover member 300B may be manufactured with lower cost and man-hours, and may implement a so-called selective opening/closing configuration in which the fire-resistant coating layer 320 is detached when venting gas is generated while executing the function of the fire-resistant coating layer 320 to block and close the venting holes H1 in a normal state.

According to this implemented configuration, even if the space between the battery module and the module case 200 is narrow, the fire-resistant coating layer 320 may be detached due to gas pressure to open the venting holes H1, thereby securing a sufficient discharge path of the venting gas. Therefore, the venting gas may be quickly discharged to the outside, thereby effectively preventing heat accumulation and thermal explosion of the battery module 10.

In addition, according to this implemented configuration, the venting holes H1 in the battery module adjacent thereto may remain closed due to the fire-resistant coating layer 320, thereby preventing external foreign substances, venting gas discharged outside the battery module 10 where the event occurred or flame or sparks contained in the venting gas from flowing into other venting holes H1. Therefore, chain ignition or thermal runaway in a normal battery cell 110 or battery module 10 due to venting gas or flame may be maximally delayed.

A battery pack according to the present disclosure may include one or more battery modules according to the present disclosure described above. In particular, in order to increase capacity and/or output, the battery pack according to the present disclosure may include multiple battery modules according to the present disclosure. In this case, various configurations described above may be applied to the respective battery modules. For example, each battery module may include the cell assembly 100, the module case 200, and the cover member 300. In addition, these multiple battery modules may be accommodated inside the pack case. Moreover, in the case of a battery module according to an embodiment of the present disclosure, thermal runaway propagation between modules may be effectively prevented even if other battery modules are located on the front or rear side thereof.

The battery pack according to the present disclosure may include various other components, in addition to the battery module or pack case, for example, components of the battery pack such as a BMS (Battery Management System), bus-bars, relays, current sensors, fuses, or the like, which are known at the time of filing the present disclosure, in the inner space of the pack case.

The battery module according to the present disclosure or the battery pack according to the present disclosure may be applied to vehicles such as electric vehicles or hybrid vehicles. That is, a vehicle according to the present disclosure may include the battery module according to the present disclosure or the battery pack according to the present disclosure. In addition, the vehicle according to the present disclosure may further include various other components included in the vehicle in addition to the battery module or battery pack. For example, the vehicle according to the present disclosure may further include a car body, a motor, and control devices such as an ECU (electronic control unit) in addition to the battery module according to the present disclosure.

In addition, the battery module according to the present disclosure or the battery pack according to the present disclosure may be applied to an energy storage system (ESS). That is, an energy storage system according to the present disclosure may include the battery module according to the present disclosure or the battery pack according to the present disclosure.

As described above, although the present disclosure has been described with reference to limited embodiments and drawings, the present disclosure is not limited thereto, and various modifications and variations are possible within the scope of the attached claims.

Meanwhile, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A battery module (10) comprising:
a cell assembly (100) comprising a plurality of battery cells (10) stacked on each other;
a module case (200) configured to store the cell assembly (100) in an inner space and having a venting hole (H1) formed thereon; and
a cover member (300) disposed on the outer surface of the module case (200) so as to cover the venting hole (H1) and comprising a fire-resistant coating layer (320) coated with a fire-resistant coating material (321) that is detached by pressure of venting gas when the venting gas is generated inside the module case (200).

2. The battery module (10) according to claim 1,
wherein the venting hole (H1) is formed on the upper side of the module case (200).

3. The battery module (10) according to claim 2,
wherein the cover member (300) further comprises a basal layer (310) coupled to the upper surface of the module case (200) so as to face the same and having the fire-resistant coating layer (320) bonded thereto.

4. The battery module (10) according to claim 3,
wherein the fire-resistant coating layer (320) is provided over the entire area of the basal layer (310), and is bonded to some or all sections of the basal layer (310) in the thickness direction thereof.

5. The battery module (10) according to claim 3,
wherein the basal layer (310) comprises: at least one mesh plate (311) having a plurality of mesh members (312) and holes (313); and
a support frame (314) disposed at an edge of the mesh plate (311) so as to support the mesh plate (311).

6. The battery module (10) according to claim 5,
wherein the fire-resistant coating layer (320) is configured by bonding the fire-resistant coating material (321) to the mesh members (312) to block the holes (313).

7. The battery module (10) according to claim 5,
wherein the fire-resistant coating layer (320) comprises one or more inorganic materials selected from ceramic, silicon, silica aerogel, and silica-based inorganic fiber.

8. The battery module (10) according to claim 7,
wherein the particle size of the inorganic material is smaller than the holes (313).

9. The battery module (10) according to claim 4,
wherein the basal layer (310) comprises a recessed guide portion (330) provided to face the venting hole (H1) and guide the introduction of the venting gas.

10. The battery module (10) according to claim 9,
wherein the recessed guide portion (330) has an axial inclined surface (331) formed to gradually become narrower in the thickness direction of the basal layer (310) when viewed upward from the venting hole (H1).

11. The battery module (10) according to claim 3,
wherein the fire-resistant coating layer (320) is partially formed on the surface of the basal layer (310), which faces the venting hole (H1).

12. A battery pack comprising the battery module (10) according to any one of claims 1 to 11.

## Patentansprüche

1. Batteriemodul (10), umfassend:
eine Zellbaugruppe (100), die eine Vielzahl von übereinander gestapelten Batteriezellen (10) umfasst;
ein Modulgehäuse (200), das konfiguriert ist, um die Zellbaugruppe (100) in einem Innenraum zu lagern, und das ein daran ausgebildetes Entlüftungsloch (H1) aufweist; und
ein Abdeckelement (300), das auf der Außenfläche des Modulgehäuses (200) angeordnet ist, um das Entlüftungsloch (H1) abzudecken, und eine feuerbeständige Beschichtungsschicht (320) umfasst, die mit einem feuerbeständigen Beschichtungsmaterial (321) beschichtet ist, das durch den Druck von Entlüftungsgas abgelöst wird, wenn das Entlüftungsgas im Inneren des Modulgehäuses (200) erzeugt wird.

2. Batteriemodul (10) nach Anspruch 1,
wobei das Entlüftungsloch (H1) an der Oberseite des Modulgehäuses (200) ausgebildet ist.

3. Batteriemodul (10) nach Anspruch 2,
wobei das Abdeckelement (300) ferner eine Basisschicht (310) umfasst, die mit der oberen Fläche des Modulgehäuses (200) gekoppelt ist, um dieser zugewandt zu sein, und die feuerbeständige Beschichtungsschicht (320) daran gebunden hat.

4. Batteriemodul (10) nach Anspruch 3,
wobei die feuerbeständige Beschichtungsschicht (320) über die gesamte Fläche der Basisschicht (310) vorgesehen ist und mit einigen oder allen Abschnitten der Basisschicht (310) in deren Dickenrichtung verbunden ist.

5. Batteriemodul (10) nach Anspruch 3,
wobei die Basisschicht (310) umfasst: mindestens eine Gitterplatte (311) mit einer Vielzahl von Gitterelementen (312) und Löchern (313); und
einen Stützrahmen (314), der an einem Rand der Gitterplatte (311) angeordnet ist, um die Gitterplatte (311) zu stützen.

6. Batteriemodul (10) nach Anspruch 5,
wobei die feuerbeständige Beschichtungsschicht (320) durch Binden des feuerbeständigen Beschichtungsmaterials (321) an die Gitterelemente (312) konfiguriert ist, um die Löcher (313) zu blockieren.

7. Batteriemodul (10) nach Anspruch 5,
wobei die feuerbeständige Beschichtungsschicht (320) ein oder mehrere anorganische Materialien umfasst, die aus Keramik, Silizium, Siliciumdioxid-Aerogel und anorganischer Faser auf Siliciumdioxidbasis ausgewählt sind.

8. Batteriemodul (10) nach Anspruch 7,
wobei die Partikelgröße des anorganischen Materials kleiner ist als die Löcher (313).

9. Batteriemodul (10) nach Anspruch 4,
wobei die Basisschicht (310) einen vertieften Führungsabschnitt (330) umfasst, der vorgesehen ist, um dem Entlüftungsloch (H1) zugewandt zu sein und die Einleitung des Entlüftungsgases zu führen.

10. Batteriemodul (10) nach Anspruch 9,
wobei der vertiefte Führungsabschnitt (330) eine axial geneigte Fläche (331) aufweist, die so ausgebildet ist, dass sie sich in Dickenrichtung der Basisschicht (310) allmählich verjüngt, wenn sie vom Entlüftungsloch (H1) nach oben betrachtet wird.

11. Batteriemodul (10) nach Anspruch 3,
wobei die feuerbeständige Beschichtungsschicht (320) teilweise auf der Oberfläche der Basisschicht (310) ausgebildet ist, die dem Entlüftungsloch (H1) zugewandt ist.

12. Batteriepack, umfassend das Batteriemodul (10) nach einem der Ansprüche 1 bis 11.

## Revendications

1. Module de batterie (10) comprenant :
un ensemble de cellules (100) comprenant une pluralité de cellules de batterie (10) empilées les unes sur les autres ;
un boîtier de module (200) configuré pour loger l'ensemble de cellules (100) dans un espace intérieur et ayant un trou d'évent (H1) formé sur celui-ci ; et
un élément de couvercle (300) disposé sur la surface extérieure du boîtier de module (200) de manière à couvrir le trou d'évent (H1) et comprenant une couche de revêtement ignifuge (320) revêtue d'un matériau de revêtement ignifuge (321) qui se détache sous la pression du gaz d'évent lorsque le gaz d'évent est généré à l'intérieur du boîtier de module (200).

2. Module de batterie (10) selon la revendication 1,
dans lequel le trou d'évent (H1) est formé sur le côté supérieur du boîtier de module (200).

3. Module de batterie (10) selon la revendication 2,
dans lequel l'élément de couvercle (300) comprend en outre une couche de base (310) couplée à la surface supérieure du boîtier de module (200) de manière à lui faire face et ayant la couche de revêtement ignifuge (320) liée à celle-ci.

4. Module de batterie (10) selon la revendication 3,
dans lequel la couche de revêtement ignifuge (320) est disposée sur toute la zone de la couche de base (310), et est liée à certaines ou à toutes les sections de la couche de base (310) dans sa direction de l'épaisseur.

5. Module de batterie (10) selon la revendication 3,
dans lequel la couche de base (310) comprend : au moins une plaque à mailles (311) ayant une pluralité d'éléments à mailles (312) et de trous (313) ; et
un cadre de support (314) disposé à un bord de la plaque à mailles (311) de manière à supporter la plaque à mailles (311).

6. Module de batterie (10) selon la revendication 5,
dans lequel la couche de revêtement ignifuge (320) est configurée en liant le matériau de revêtement ignifuge (321) aux éléments à mailles (312) pour bloquer les trous (313).

7. Module de batterie (10) selon la revendication 5,
dans lequel la couche de revêtement ignifuge (320) comprend un ou plusieurs matériaux inorganiques choisis parmi la céramique, le silicium, l'aérogel de silice et la fibre inorganique à base de silice.

8. Module de batterie (10) selon la revendication 7,
dans lequel la taille de particule du matériau inorganique est plus petite que les trous (313).

9. Module de batterie (10) selon la revendication 4,
dans lequel la couche de base (310) comprend une portion de guidage en creux (330) disposée pour faire face au trou d'évent (H1) et guider l'introduction du gaz d'évent.

10. Module de batterie (10) selon la revendication 9,
dans lequel la portion de guidage en creux (330) a une surface inclinée axiale (331) formée pour devenir progressivement plus étroite dans la direction de l'épaisseur de la couche de base (310) lorsqu'elle est vue vers le haut depuis le trou d'évent (H1).

11. Module de batterie (10) selon la revendication 3,
dans lequel la couche de revêtement ignifuge (320) est partiellement formée sur la surface de la couche de base (310), qui fait face au trou d'évent (H1).

12. Bloc-batterie comprenant le module de batterie (10) selon l'une quelconque des revendications 1 à 11.
